# FASCICULE DE BREVET EUROPEEN

(11) **EP 3 490 735 B1**
(45) Date de publication et mention de la délivrance du brevet: **10.04.2024**
(21) Numéro de dépôt: 17740025.6
(22) Date de dépôt: 18.07.2017
(51) Int. Cl.: B08B 17/06, B60S 1/04, B60S 1/56

(54) **SYSTEME D'ASSISTANCE A LA CONDUITE COMPRENANT UN CAPTEUR OPTIQUE ET UN DISPOSITIF DE PROTECTION D'U CAPTEUR OPTIQUE**
FAHRASSISTENZSYSTEM MIT EINEM OPTISCHEN SENSOR UND EINER VORRICHTUNG ZUM SCHUTZ DES OPTISCHEN SENSORS
DRIVING AID SYSTEM COMPRISING AN OPTICAL SENSOR AND A DEVICE FOR PROTECTING THE OPTICAL SENSOR

(30) Priorité: 28.07.2016 FR 1657320
(43) Date de publication de la demande: 05.06.2019
(73) Titulaire: Valeo Systèmes d'Essuyage, 78322 Le Mesnil Saint Denis (FR)
(72) Inventeur: BRETAGNOL, Frédéric, 63500 ISSOIRE (FR); GRASSO, Giuseppe, 63500 ISSOIRE (FR); KOLANOWSKI, Grégory, 63500 ISSOIRE (FR); TREBOUET, Marcel, 78322 LE MESNIL SAINT DENIS (FR)
(74) Mandataire: Valeo Visibility
(86) Numéro de dépôt international: PCT/EP2017/068138
(87) Numéro de publication internationale: WO 2018/019662

(56) Documents cités:
- EP-A1- 2 873 571
- GB-A- 2 299 560
- US-A1- 2011 181 725

## Description

La présente invention se rapporte au domaine de l'aide à la conduite et notamment aux systèmes d'assistance à la conduite, implantés sur certains véhicules, le système d'assistance à la conduite pouvant comporter un capteur optique, comme par exemple une caméra comprenant une lentille. Plus particulièrement, l'invention concerne un dispositif de protection d'un tel capteur optique, le capteur optique pouvant être disposé à l'intérieur d'un élément de carrosserie d'un véhicule automobile par exemple.

Actuellement, des caméras de vision avant, arrière, ou encore latérales équipent un grand nombre de véhicules automobiles. Elles font notamment partie des systèmes d'assistance à la conduite, tels que des systèmes d'aide au stationnement, ou encore des systèmes de détection de franchissement de ligne.

Il existe des caméras installées à l'intérieur de l'habitacle d'un véhicule pour l'aide au stationnement. Ces caméras sont bien protégées des aléas climatiques et des salissures causées par des polluants organiques ou minéraux. Cependant, l'angle de vue pour de telles caméras, installées à l'intérieur de l'habitacle, n'est pas optimal, en particulier pour une aide au stationnement, car elles ne permettent pas de voir les obstacles se trouvant à proximité de l'arrière du véhicule par exemple.

On préfère donc installer ces systèmes d'assistance à la conduite, et notamment leurs caméras, à l'extérieur des véhicules à différents endroits selon l'utilisation souhaitée. Dans un tel cas, le système d'assistance à la conduite, et en particulier la caméra d'un tel système, est fortement exposé aux aléas climatiques ainsi qu'aux projections de saletés minérales ou organiques qui peuvent réduire son efficacité, voire le rendre inopérant.

Pour contrer le dépôt de saletés sur le système d'assistance à la conduite, il est connu d'agencer un dispositif de nettoyage de l'optique de la caméra, généralement un gicleur de liquide de nettoyage à proximité de celle-ci afin de supprimer les éléments polluants qui se sont déposés au cours du temps.

Cependant, l'utilisation de ces gicleurs entraîne une augmentation des coûts de fonctionnement d'un tel système d'assistance à la conduite car ils nécessitent l'utilisation de quantités de liquide de nettoyage assez importantes.

D'autre part, l'optique de la caméra, généralement formée par une lentille, est un dispositif relativement fragile. Il est donc nécessaire de la protéger des projections qui pourraient l'endommager. Il est donc fréquent de trouver de telles caméras logées dans des boîtiers de protection comprenant une fenêtre de protection agencée en regard de la lentille. Cependant, le nettoyage de la lentille ou de la fenêtre du boîtier protégeant celle-ci est un critère important pour assurer le bon fonctionnement de la caméra.

On connaît du document FR2841488 un tel boîtier renfermant un capteur optique avec des moyens de nettoyage du boîtier composés d'un gicleur et de moyens pour faire vibrer une fenêtre faisant face à la caméra.

Cependant, ce dispositif peut être, dans certains cas trop encombrant, notamment lorsqu'il est destiné à être installé au niveau de la plaque d'immatriculation du véhicule, au niveau du pare-chocs avant ou arrière, ou encore au niveau des rétroviseurs. Par ailleurs, ce dispositif permet uniquement le ruissellement du liquide de nettoyage sur la fenêtre, son efficacité pour des salissures tenaces et incrustées peut être limitée malgré la vibration de la vitre et le traitement catalytique que celle-ci a subi.

Afin de pouvoir installer ce système d'assistance à la conduite à tout endroit utile du véhicule, il est possible de s'affranchir du boîtier de protection comprenant des moyens de nettoyage tel que décrit précédemment. Il faut, dans ce cas, prévoir un boîtier de protection plus petit et adapté à la taille du capteur optique pour protéger celui-ci. Il faut également prévoir des moyens de nettoyage de l'optique du système d'assistance à la conduite pour que celui-ci présente de bonnes conditions de fonctionnement, comme par exemple l'obtention d'images propres et nettes ce qui semble difficile si l'optique d'un tel système est contaminé par des polluants organiques ou minéraux ou encore par des traces d'eau. On connaît du document US8899761 un tel boîtier de protection destiné à recevoir un capteur optique pour véhicule automobile tel qu'une caméra, et destiné à être installé à l'extérieur du véhicule. Le boîtier de protection décrit dans ce document comprend un couvercle externe fixe, destiné à protéger la lentille de la caméra, et un transducteur piézoélectrique destiné à faire vibrer l'ensemble et de permettre ainsi la chute des salissures du couvercle.

Cependant, une telle vibration de l'ensemble augmente fortement les risques de cassures et/ou de fêlures du matériau composant la lentille de la caméra ou le couvercle fermant le boîtier de protection dans lequel se trouve la caméra. Il est donc nécessaire d'utiliser des verres ou des plastiques très résistants aux chocs et aux vibrations et ne présentant aucun défaut de fabrication pour la réalisation de ces éléments. Cette contrainte entraîne une augmentation des coûts pour la fabrication de tels systèmes car les verres et les plastiques pouvant supporter ces contraintes mécaniques sont généralement onéreux et l'absence nécessaire de défauts peut entraîner une augmentation du nombre de pièces à mettre au rebut. Par ailleurs, les vibrations de l'ensemble peuvent endommager le système interne de la caméra, en particulier ses composants électroniques.

Afin de pouvoir installer le système d'assistance à la conduite à l'extérieur du véhicule sans nécessiter de boîtier de protection, il est connu d'installer ces systèmes à l'intérieur de certains éléments de carrosserie comme les rétroviseurs ou encore les pare-chocs avant ou arrière et faisant légèrement saillie de ces éléments de carrosserie. La lentille de la caméra est généralement recouverte par un couvercle de protection afin d'assurer sa protection contre les projections et/ou les chocs. Un système de nettoyage doit également être prévu pour de telles installations. On connaît du document US2012/0000024 un dispositif de protection d'un capteur optique installé de cette manière. Ce dispositif de protection comprend un disque transparent monté rotatif dans un boîtier. Le boîtier comprend des coussins nettoyants et un élément chauffant pour assurer le dégivrage du disque transparent. Le boîtier externe peut également comprendre un balai d'essuie-glace afin de retirer les salissures solides pouvant se déposer sur le disque rotatif. Le disque rotatif équipant ce dispositif de protection présente un diamètre plus important que la lentille de la caméra, généralement au moins deux fois plus grand, son axe de rotation étant décentré de l'axe optique de la caméra.

Cependant, un tel dispositif de protection ne permet pas au capteur optique d'avoir un grand angle de vision car le capteur optique est situé après ce boîtier. Ainsi, l'épaisseur du boîtier nuit à l'obtention d'un grand angle de vision pour un tel capteur optique. Or, pour fonctionner de manière optimale, un tel système d'assistance à la conduite doit proposer un grand angle de vision. D'autre part, le nettoyage des coussins peut être problématique car ils risquent de s'encrasser et/ou de moisir du fait du taux d'humidité, de la température, et des éventuelles salissures résiduelles qui vont se déposer dessus. De plus, il est possible que le disque transparent présente des micro-rayures provoquées par des résidus de faible taille qui pourraient se bloquer entre l'essuie-glace et le disque transparent, ce qui nuirait au bon fonctionnement du capteur optique installé à l'intérieur d'un tel boîtier car ces micro-rayures risquent de nuire à la qualité de l'image.

On connaît également du document DE102008027430 un dispositif de protection d'un capteur optique utilisant un couvercle rotatif présentant des propriétés hydrophobes et/ou permettant de limiter l'adhésion des salissures sur ce dernier, destiné à être entraîné en rotation par un moteur électrique. Le dispositif de protection comprend également une buse de projection d'un liquide de nettoyage, un élément de lavage qui peut être un balai d'essuie-glace et un élément de séchage.

Cependant, un tel dispositif de protection peut être bruyant si le couvercle est mis en rotation à des vitesses élevées, notamment à cause des frottements entre le couvercle et le balai d'essuie-glace. Par ailleurs, les éléments de nettoyage et de séchage peuvent présenter une usure prématurée du fait de la rotation continue à vitesse assez élevée du couvercle. D'autre part, un tel dispositif de protection peut être assez encombrant à installer, car le couvercle rotatif est excentré par rapport au capteur optique et présente un diamètre au moins deux fois supérieur au diamètre de l'optique du capteur optique qu'il protège et dont il assure une bonne opérabilité. Ensuite, il est possible que des micro-rayures apparaissent sur le couvercle si des particules solides se déposent entre l'essuie-glace et le couvercle rotatif. De ce fait, le champ de vision et la qualité des images prises par le capteur optique peuvent être affectés comme précédemment. Enfin, l'utilisation d'un tel système de protection ne permet pas d'avoir un grand angle de vision, du fait de l'agencement du capteur optique à l'intérieur d'un boîtier portant le couvercle, sans faire saillie de ce boîtier.
Le document US2011/0181725 A1 décrit quant à lui un système d'assistance à la conduite d'un véhicule automobile selon le préambule de la revendication 1.

La présente invention se propose de remédier au moins partiellement aux inconvénients de l'état de la technique mentionnés ci-dessus en proposant un dispositif de protection de l'optique d'un capteur optique, comme la lentille d'une caméra, et faisant saillie de celui-ci.

Un autre objectif de la présente invention est de proposer un dispositif de protection permettant un nettoyage rapide et efficace de la lentille.

La présente invention a également pour objectif de proposer un dispositif de protection permettant de diminuer les quantités nécessaires de fluide de nettoyage pour le nettoyage de l'optique.

A cet effet, l'invention a pour objet un système d'assistance à la conduite d'un véhicule automobile selon la revendication 1.

Ainsi, le dispositif de protection peut être installé sur un capteur optique destiné à être installé à l'intérieur d'un élément de carrosserie du véhicule, ou encore à l'extérieur du véhicule, tout en permettant au capteur optique de conserver un grand angle de vision.

On entend par « salissures » aussi bien des gouttes d'eau que des polluants organiques ou minéraux.

Lorsqu'il pleut ou par temps sec, des salissures risquent de se déposer sur l'élément optique et peuvent nuire à la bonne opérabilité du capteur optique. Lorsque l'élément optique est mis en rotation à une vitesse relativement élevée à l'aide de l'actionneur, les salissures éventuelles sont éjectées par effet centrifuge. En effet, le travail de la force centrifuge ainsi provoquée est supérieur à la force d'adhésion des salissures sur l'élément optique. Ainsi, le capteur optique conserve une bonne opérabilité et son encrassement est limité quelles que soient les conditions climatiques. Le système d'assistance à la conduite conserve ainsi une bonne visibilité.

Le système d'assistance à la conduite d'un véhicule automobile selon l'invention peut comporter en outre une ou plusieurs des caractéristiques suivantes prises seules ou en combinaison :
L'actionneur comprend un moteur électrique d'entraînement de l'élément optique, tel qu'un moteur sans balais.

Le moteur électrique est configuré pour mettre en rotation l'élément optique à une vitesse comprise entre 1000 et 50000 tours/minute, de préférence entre 5000 et 20000 tours/minute, et de manière encore préférée entre 7000 et 15000 tours/minute.

L'actionneur est couplé à l'élément optique par des moyens de couplage choisis dans la liste suivante : une courroie, un engrenage, un cylindre élastique d'entraînement, un galet.

L'élément optique présente une surface externe ayant au moins une des propriétés choisies dans la liste suivante : hydrophobes, photocatalytiques, super hydrophobes, oléophobes, hydrophiles, super hydrophiles.

Selon une variante, l'élément optique est formé par une lentille extérieure de l'objectif du capteur optique.

Selon une autre variante, l'élément optique est distinct de l'objectif du capteur optique.

Selon cette seconde variante, l'élément optique est relié à un cadre de fixation configuré pour accueillir le capteur optique.

Selon cette seconde variante, l'élément optique peut être plan.

Selon cette seconde variante, l'élément optique peut être convexe.

Le dispositif de protection du capteur optique comprend au moins une buse de projection d'un fluide sur l'élément optique.

Selon une variante, le fluide est de l'air comprimé.

Selon une autre variante, le fluide est un liquide de nettoyage.

Le dispositif de protection du capteur optique comprend au moins un palier configuré pour assurer la mise en rotation de l'élément optique par rapport au capteur optique.

Ainsi, le système d'assistance à la conduite selon l'invention comportant au moins une caméra peut être installé sur tout élément de carrosserie et permet d'offrir un grand angle de vue. Par ailleurs, le champ de vision de la caméra ne peut pas être altéré par la présence de de salissures. Le capteur optique composant ce système d'assistance à la conduite présente donc un fonctionnement optimisé.

Le système d'assistance à la conduite peut comprendre en outre une ou plusieurs des caractéristiques suivantes prises seules ou en combinaison :
Selon une variante, l'unité électronique de contrôle est configurée pour activer l'actionneur afin de mettre en rotation l'élément optique de manière permanente lors du fonctionnement du véhicule.

Selon une autre variante, l'unité électronique de contrôle est configurée pour activer l'actionneur afin de mettre en rotation l'élément optique de manière intermittente lors du fonctionnement du véhicule.

L'actionneur est configuré pour diminuer la vitesse de rotation de l'élément optique lorsque la vitesse du véhicule augmente lorsque l'élément optique est installé à l'avant du véhicule.

Selon une variante, l'unité électronique de contrôle est configurée pour déclencher la projection d'au moins un fluide sur l'élément optique lorsque le capteur optique détecte la présence de salissures au niveau de son champ de vision, comme par exemple du liquide de nettoyage ou de l'air comprimé.

Selon une autre variante, l'unité électronique de contrôle est configurée pour déclencher la projection de deux fluides différents, tels que du liquide nettoyant et de l'air comprimé, de manière consécutive.

Le dispositif de protection comprend un capteur capacitif de proximité relié à l'unité électronique de contrôle configuré pour détecter l'approche d'un autre objet à proximité de l'élément optique et de permettre à l'unité électronique de contrôle de commander l'arrêt automatique de l'actionneur afin de stopper la rotation de l'élément optique en cas d'approche d'un autre objet.

Ainsi, la mise en oeuvre de manière consécutive de la rotation de l'élément optique et de la projection de fluide sur celui-ci permet un nettoyage efficace de l'élément optique et une bonne opérabilité du capteur optique quelles que soient les conditions climatiques. En effet, il est possible que des salissures tenaces se déposent sur l'élément optique lorsque le véhicule est en stationnement. En utilisant du liquide de nettoyage et/ou de l'air comprimé en complément de l'effet centrifuge, ces salissures tenaces sont éliminées de l'élément optique. Cette association de projection de fluide et de mise en rotation de l'élément optique permet donc de former un système nettoyant de l'optique du capteur optique.

D'autres avantages et caractéristiques apparaîtront à la lecture de la description de l'invention ainsi que des dessins annexés dans lesquels :
- la figure 1 est une vue en coupe longitudinale du système d'assistance à la conduite selon un premier mode de réalisation,
- la figure 2 est une vue schématique avant du système d'assistance à la conduite installé dans un élément de carrosserie du véhicule,
- la figure 3 est une vue schématique arrière du système d'assistance à la conduite installé dans un élément de carrosserie du véhicule,
- la figure 4 est une vue schématique du dispositif de protection du capteur optique selon un mode de réalisation particulier,
- la figure 5 est une vue schématique longitudinale du système d'assistance à la conduite selon le mode de réalisation particulier de la figure 4,
- la figure 6 est une vue schématique en perspective du système d'assistance à la conduite selon le mode de réalisation particulier de la figure 4, et
- la figure 7 est une vue schématique du système d'assistance à la conduite selon un autre mode de réalisation.

Sur ces figures, les éléments identiques portent les mêmes références numériques.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées ou interchangées pour fournir d'autres réalisations.

Dans la description suivante, il est fait référence à une première et à une seconde buse. Il s'agit d'un simple indexage pour différencier et dénommer des éléments proches mais non identiques. Cette indexation n'implique pas une priorité d'un élément par rapport à un autre et on peut aisément interchanger de telles dénominations sans sortir du cadre de la présente description. Cette indexation n'implique pas non plus un ordre dans le temps par exemple pour apprécier le fonctionnement du dispositif de nettoyage du capteur optique.

Dans la description suivante, amont est défini par le sens des rayonnements lumineux, c'est-à-dire de l'extérieur vers l'intérieur du capteur optique. Par ailleurs, dans la description suivante, on entend par convexe courbé vers l'extérieur du capteur optique.

Dans la description suivante, on entend par salissures aussi bien des gouttes d'eau que des traces d'eau, des polluants organiques ou minéraux, ou encore une combinaison de ces différents éléments.

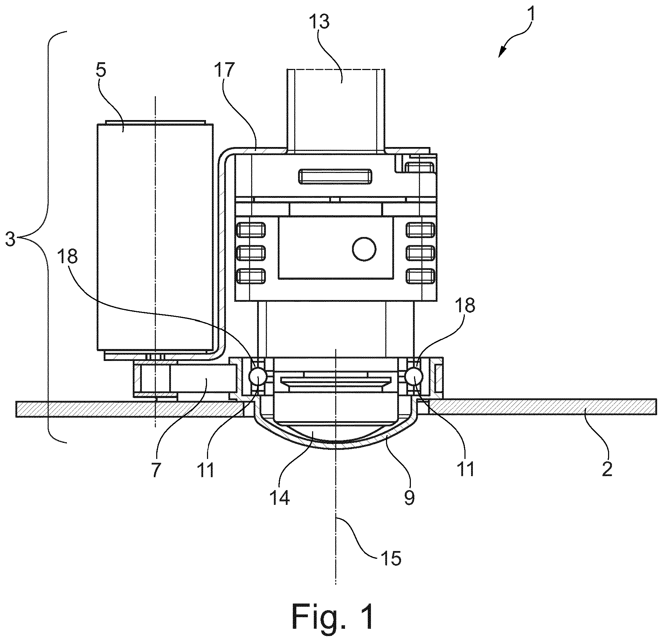

En référence à la figure 1, l'invention concerne un système d'assistance à la conduite 1 destiné à être notamment installé dans un élément de carrosserie 2 d'un véhicule automobile. Le système d'assistance à la conduite comporte un dispositif de protection 3 d'un capteur optique 13 pour véhicule automobile, tel qu'une caméra présentant une optique 14, comme par exemple une lentille. Le dispositif de protection 3 selon ce mode de réalisation est destiné à être fixé au capteur optique 13.

Le dispositif de protection 3 comporte en outre un élément optique transparent 9 et un actionneur 5.

L'élément optique 9 présente une symétrie de révolution et est monté rotatif autour d'un axe de rotation confondu avec l'axe optique 15 du capteur optique 13, l'axe de révolution de l'élément optique 9 étant également l'axe de rotation de celui-ci. Selon ce mode de réalisation, l'élément optique 9 est configuré pour être disposé en amont du capteur optique 13 pour protéger celui-ci des salissures.

L'actionneur 5 est couplé à l'élément optique 9 à l'aide de moyens de couplage 7 pour la mise en rotation de l'élément optique 9 afin de permettre l'élimination des salissures par un effet centrifuge. En effet, la force centrifuge que les salissures vont subir du fait de la mise en rotation de l'élément optique 9 est supérieure à l'adhérence de ces salissures sur l'élément optique 9. Ainsi, les salissures sont éjectées de l'élément optique 9 et ne perturbent pas le champ de vision du capteur optique 13.

Selon ce mode de réalisation particulier, l'actionneur 5 du dispositif de protection 3 est destiné à être fixé au capteur optique 13 à l'aide d'un support de fixation 17.

Selon ce mode de réalisation, l'actionneur 5 comprend un moteur électrique d'entraînement de l'élément optique 9, et plus particulièrement un moteur sans balais. Le moteur électrique composant l'actionneur 5 est configuré pour mettre en rotation l'élément optique 9 à une vitesse comprise entre 1000 et 50000 tours/minute, de préférence entre 5000 et 20000 tours/minute, et de manière encore préférée entre 7000 et 15000 tours/minute. De telles vitesses de rotation sont suffisantes pour permettre l'élimination des salissures qui se sont déposées sur l'élément optique 9 par effet centrifuge et ainsi de maintenir un état de propreté de l'optique 14 du capteur optique 13 idéal pour assurer un fonctionnement optimisé du système d'assistance à la conduite 1.

Pour que le système d'assistance à la conduite 1 présente un fonctionnement optimisé, il faut également limiter les possibilités d'adhérence des polluants organiques ou minéraux ainsi que la présence de traces d'eau sur l'élément optique 9. A cet effet, l'élément optique 9 présente une surface externe ayant une ou plusieurs des propriétés suivantes : hydrophobe, photocatalytique, super hydrophobe, oléophobe, hydrophile, ou encore super hydrophile, ou tout autre traitement de surface permettant de réduire l'adhésion des salissures. Grâce aux propriétés hydrophobes de la surface externe de l'élément optique 9, l'eau ne pourra que ruisseler sur celui-ci sans laisser de traces car l'eau ne pourra pas adhérer sur celui-ci. D'autre part, les propriétés photocatalytiques de la surface externe de l'élément optique 9 limitent les possibilités d'adhérence des polluants organiques ou minéraux sur celui-ci. Ainsi, la composition de l'élément optique 9 permet de limiter la présence de traces pouvant nuire au bon fonctionnement du système d'assistance à la conduite 1.

Avantageusement, une solution liquide (par exemple de type Rain-X^{®}) peut être déposée (de manière périodique et manuelle) sur la surface externe de l'élément optique 9 afin de former une pellicule hydrophobe.

De manière optionnelle, un traitement antibuée peut être appliqué sur la surface interne de l'élément optique 9 afin d'éviter un phénomène de condensation entre la lentille extérieure de l'optique 14 et la surface interne de l'élément optique 9.

Selon le mode de réalisation décrit ici, l'élément optique 9 est disposé en regard, plus précisément en amont, de l'optique 14 du capteur optique 13, centré par rapport à celle-ci et il recouvre toute la surface de cette lentille. Ainsi, la lentille de la caméra est protégée des projections éventuelles de polluants organiques ou minéraux et d'eau pouvant l'endommager. Par ailleurs, les traitements subis par l'élément optique 9 assurent un fonctionnement optimisé de cette caméra.

Selon le mode de réalisation décrit ici, l'élément optique 9 présente un diamètre proche de celui de l'optique 14 du capteur optique 13. Ainsi, le dispositif de protection 3 peut être installé aisément sur tout type de capteur optique 13 grâce à sa dimension adaptée à celle du capteur optique 13.

Selon le mode de réalisation particulier de la figure 1, l'élément optique 9 est distinct du capteur optique 13. Par ailleurs, l'élément optique 9 est disposé en amont de l'optique 14 du capteur optique 13.

Selon le mode de réalisation de la figure 1, l'élément optique 9 peut par exemple être un verre de protection. L'élément optique 9 est destiné à protéger l'optique 14 du capteur optique 13 des projections éventuelles de débris solides qui pourraient abîmer cette optique 14. Selon ce mode de réalisation, l'élément optique 9 distinct du capteur optique 13 est convexe. Cependant, l'élément optique 9 distinct du capteur optique 13 peut, selon un autre mode de réalisation non représenté ici, être plan.

Selon un autre mode de réalisation non représenté ici, l'élément optique 9 peut être formé par une lentille extérieure de l'optique 14 du capteur optique 13. Dans un tel cas, le capteur optique 13 comprend un actionneur 5 intégré pour permettre la mise en rotation de l'élément optique 9. Dans ce cas, l'élément optique 9 est monté rotatif sur le capteur optique 13, par exemple à l'aide d'au moins un palier 11 disposé sur un élément fixe du capteur optique 13. À titre d'exemple, dans ce cas l'élément fixe du capteur optique 13 peut être réalisé sous forme de bague intégrée au capteur optique 13.

Selon le mode de réalisation particulier décrit ici, et de manière non-limitative, les moyens de couplage 7 de l'actionneur 5 et de l'élément optique 9 sont composés par une courroie.

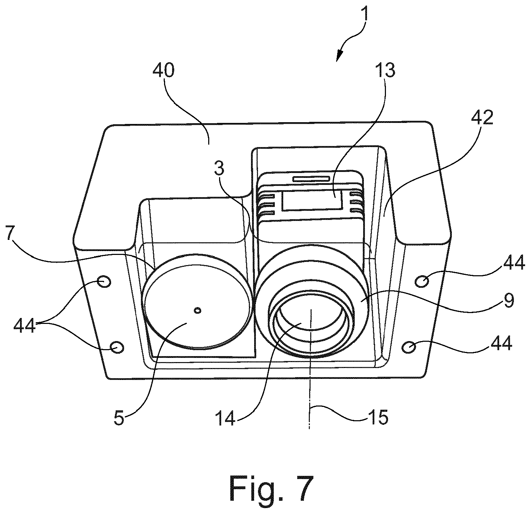

De manière alternative, l'élément de couplage 7 peut être un engrenage, un cylindre élastique d'entraînement, ou encore un galet comme cela est représenté sur la figure 7.

Selon un autre mode de réalisation non-représenté ici, l'élément optique peut être mis en rotation à l'aide d'un système magnétique comprenant deux éléments complémentaires portés d'une part par le palier 11 et d'autre part par l'élément optique 9.

Avantageusement, selon ce mode de réalisation, il n'y a pas de contact entre les différentes pièces assurant la mise en rotation de l'élément optique 9. Ainsi, l'usure de l'élément de couplage 7 peut être limitée.

Selon le mode de réalisation représenté sur la figure 1, le dispositif de protection 3 comprend au moins un palier 11, ou roulement configuré pour assurer la mise en rotation de l'élément optique 9 par rapport au capteur optique 13. La bague intérieure du palier 11 est en contact avec une surface externe du capteur optique 13 et la bague extérieure est en contact avec l'élément optique 9 qui est en contact avec l'élément de couplage 7. Selon une variante de réalisation, le palier 11 est agencé entre l'élément optique 9 et une bague fixe 18 intégrée dans le dispositif de protection 3 et configurée pour accueillir l'objectif du capteur optique 13. Cette bague fixe 18 présente une ouverture de diamètre suffisant pour que la lentille 14 du capteur optique 13 puisse passer à travers cette bague 18 et que l'objectif du capteur optique 13 vienne en appui à l'intérieur. Le palier 11 est configuré pour assurer la mise en rotation de l'élément optique 9 par rapport à la bague fixe 18 et donc par rapport au capteur optique 13 lorsque celui-ci est équipé du dispositif de protection 3. Selon ce mode de réalisation particulier, le dispositif de protection 3 comprend un palier 11 qui peut être un palier à billes par exemple

En fonctionnement, l'actionneur 5 met en rotation l'élément optique 9 par rapport au capteur optique 13 grâce aux moyens de couplage 7. Cette mise en rotation est possible grâce à la présence du palier 11.

En référence à la figure 1, le système d'assistance à la conduite 1 fait saillie d'une ouverture présente dans d'un élément de carrosserie 2. Ainsi, l'optique 14 et l'élément optique 9 font saillie de cette ouverture et permettent au système d'assistance à la conduite 1 de présenter un grand angle de vision tout en conservant de bonnes conditions d'opérabilité et une protection efficace de l'optique 14 grâce au dispositif de protection 3 décrit ci-dessus.

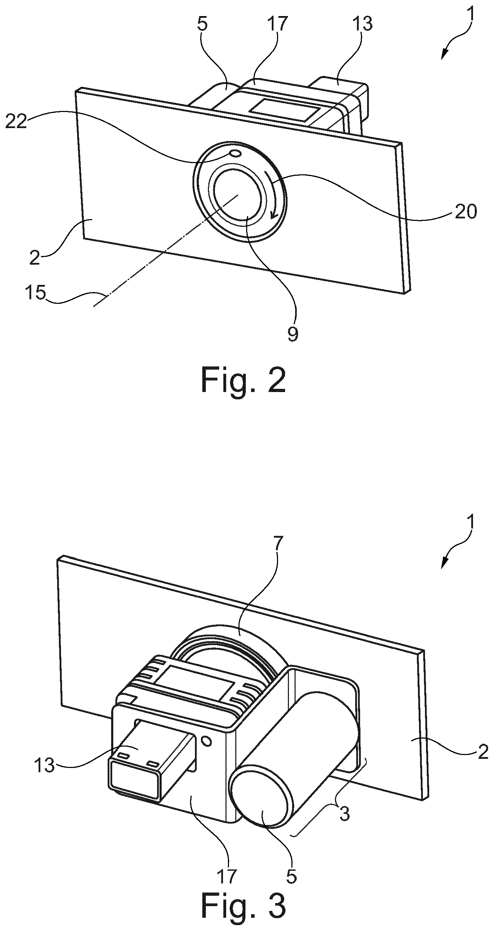

En référence aux figures 2 et 3, le système d'assistance à la conduite 1 est représenté installé à l'intérieur d'un élément de carrosserie 2 d'un véhicule automobile.

En référence aux figures 2 et 3, le système d'assistance à la conduite 1 est fixé à l'intérieur de l'élément de carrosserie 2 selon toute technique connue de l'homme de l'art comme par exemple un système de clips, un système de vissage, ou encore un système de collage.

Sur la figure 2, la flèche 20 illustre le sens de rotation de l'élément optique 9. Ici, la rotation s'effectue dans le sens horaire. Cependant, cette rotation peut tout à fait s'effectuer dans le sens antihoraire selon un autre mode de réalisation non représenté ici.

Le système d'assistance à la conduite 1 comprend au moins une buse 22 de projection d'un fluide sur l'élément optique 9. Selon le mode de réalisation décrit ici, le système d'assistance à la conduite 1 comprend une buse 22 de projection d'un fluide sur l'élément optique 9.

Cette buse 22 est située, sur cette représentation et de manière non-limitative, au-dessus de l'élément optique 9. Toutefois, selon d'autres modes de réalisation non représentés ici, la buse 22 peut se situer à n'importe quel endroit à proximité de l'élément optique 9.

Le fluide projeté par la buse 22 peut être de l'air comprimé ou un liquide de nettoyage afin d'assurer le nettoyage de l'élément optique 9 si la mise en rotation de celui-ci n'est pas suffisante pour éliminer les différentes salissures qui se sont déposées sur celui-ci. Alternativement, la projection de fluide peut être utilisée de manière complémentaire à la rotation de l'élément optique 9 afin d'assurer un état de propreté optimisé de celui-ci.

Par ailleurs, selon d'autres modes de réalisation non représentés ici, le dispositif de protection 3 peut comprendre plusieurs buses. Le dispositif de protection 3 peut par exemple comprendre une première buse 22 configurée pour projeter un premier fluide tel que du liquide de nettoyage, et une seconde buse configurée pour projeter un second fluide tel que de l'air comprimé, sur l'élément optique 9.

Selon le mode de réalisation de la figure 2, la buse est reliée au système de distribution du liquide de nettoyage du véhicule.

Selon un autre mode de réalisation non représenté ici, le dispositif de protection 3 peut comprendre un réservoir de liquide de nettoyage qui lui est propre. Dans ce cas, il est possible d'installer ce système d'assistance à la conduite 1 relativement aisément à l'intérieur de tout élément de carrosserie 2 du véhicule automobile, comme par exemple les pare-chocs avant ou arrière ou encore les rétroviseurs, sans nécessiter une conception initiale longue et complexe au niveau du véhicule pour raccorder le dispositif de protection 3 au système de liquide de nettoyage du véhicule de manière à alimenter la buse 22. Dans cette configuration, il est également possible d'installer ce dispositif de protection 3 aisément sur tout capteur optique 13 situé à l'extérieur du véhicule.

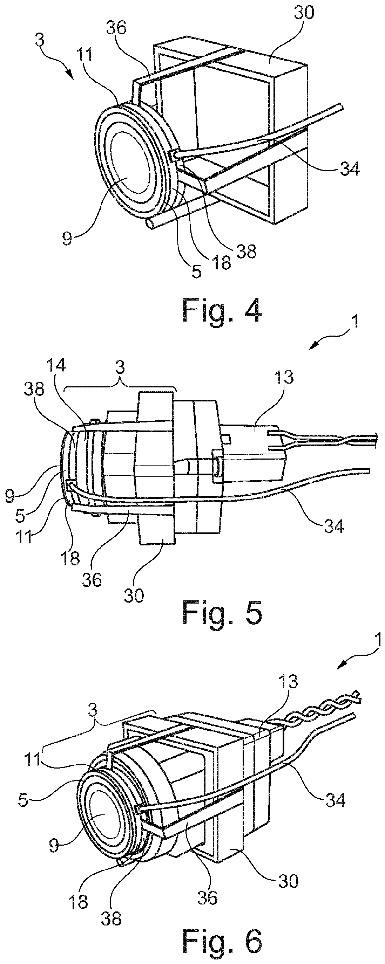

En référence à la figure 4, le dispositif de protection 3 représenté ici est destiné à accueillir un capteur optique 13 comme cela est représenté sur les figures 5 et 6 afin de former le système d'assistance à la conduite 1.

Selon le mode de réalisation de la figure 4, l'élément optique 9 est relié à un support de fixation, par exemple réalisé sous la forme d'un cadre de fixation 30, configuré pour accueillir le capteur optique 13. A cet effet, une ouverture est présente à l'intérieur du cadre de fixation 30. Cette ouverture est configurée pour accueillir le capteur optique 13.

Selon un mode de réalisation non-représenté ici, le cadre de fixation 30 peut présenter des moyens de réglage de sorte que l'ouverture puisse s'adapter à différents boîtiers de caméras de diverses dimensions.

Selon le mode de réalisation de la figure 4, le dispositif de protection 3 comprend des sangles 36 qui sont fixées au cadre de fixation 30, permettant de relier le cadre de fixation 30 à l'élément optique 9. Ces sangles 36 sont par exemple reliées à une butée 38 de forme sensiblement circulaire, comme cela est représenté sur la figure 4, et configurée pour que l'objectif du capteur optique 13 vienne en appui dessus, comme cela est représenté sur les figures 5 et 6. Cette butée 38 peut porter la bague fixe 18, le palier 11 et l'élément optique 9. Selon ce mode de réalisation, l'actionneur 5 est disposé en contact avec l'élément optique 9.

Selon un autre mode de réalisation non représenté ici, les sangles 36 peuvent également être réglables ou encore élastiques de manière à pouvoir s'adapter à tout type de capteur optique 13.

Selon le mode de réalisation des figures 5 et 6, l'optique 14 du capteur optique 13 est en contact avec la butée 38 qui porte la bague fixe 18, le palier 11, l'actionneur 5 et l'élément optique 9. Ainsi, l'optique 14 est protégée de toute projection solide qui pourrait l'endommager.

Selon un autre mode de réalisation non représenté ici, la bague fixe 18 et la butée 38 peuvent être la même pièce.

Selon le mode de réalisation particulier des figures 4 à 6, l'actionneur 5 est alimenté électriquement par une alimentation 34 reliée au circuit électrique général du véhicule.

La figure 7 représente un mode de réalisation alternatif aux figures 4 à 6. Selon cette alternative, le système d'assistance à la conduite comprend un bloc 40, destiné à être installé à l'intérieur d'un élément de carrosserie, et sur lequel est fixé le dispositif de protection 3. Le bloc 40 comprend un logement 42 configuré pour accueillir le capteur optique 13, l'élément optique 9 étant disposé au niveau d'une ouverture du logement 42 pour le passage de l'optique 14 du capteur optique 13. Le bloc 40 comprend également des trous 44 pour permettre la fixation de ce bloc 40 à l'intérieur d'un élément de carrosserie. Selon le mode de réalisation représenté sur la figure 7, le bloc 40 comprend quatre trous 44.

De plus, l'élément de couplage 7 peut comprendre une bague présentant un coefficient de friction choisi suffisamment grand pour transmettre le mouvement de rotation de l'actionneur 5 à l'élément optique 9, comme par exemple un galet.

Selon ce mode de réalisation particulier, le moteur assurant la mise en mouvement de l'actionneur 5 est disposé à l'intérieur du bloc 40.

Selon un autre mode de réalisation non représenté ici, le moteur assurant la mise en mouvement de l'actionneur 5 peut être disposé à l'extérieur du bloc 40.

Par ailleurs, une fois le bloc 40 installé à l'intérieur de l'élément de carrosserie l'optique 14 du capteur optique 13 et l'élément optique 9 font saillie d'une ouverture présente dans l'élément de carrosserie, de façon similaire au mode décrit en référence aux figures 1 et 2.

Selon un mode de réalisation particulier non représenté ici, le bloc 40 est directement relié au système électrique du véhicule pour alimenter l'actionneur 5.

Selon un autre mode de réalisation particulier non représenté ici, le bloc 40 peut comprendre au moins une fiche de raccordement du capteur optique 13 à l'intérieur du logement 42. Cette fiche permet d'assurer l'alimentation électrique du capteur optique 13 et la transmission des images captées par celui-ci.

Le système d'assistance à la conduite 1 comprend donc un capteur optique 13 comportant un dispositif de protection 3 tel que décrit précédemment et une unité électronique de contrôle, non-représentée ici, notamment configurée pour activer l'actionneur 5 afin de mettre en rotation de l'élément optique 9.

Selon le mode de réalisation décrit ici, l'actionneur 5 est activé par l'unité électronique de contrôle de telle sorte que l'élément optique 9 soit mis en rotation de manière permanente pendant le fonctionnement du véhicule.

Selon un autre mode de réalisation, l'unité électronique de contrôle est configurée pour activer l'actionneur 5 afin de mettre en rotation l'élément optique 9 de manière intermittente lors du fonctionnement du véhicule. Selon ce mode de réalisation, l'unité électronique de contrôle pourra, par exemple, commander la mise en marche de l'actionneur 5 lorsque l'utilisateur du véhicule utilisera une fonctionnalité du véhicule nécessitant la mise en oeuvre du capteur optique 13, comme par exemple lorsqu'il passera la marche arrière quand le système d'assistance à la conduite 1 est installé pour permettre une vue à l'arrière du véhicule de façon à faciliter le stationnement de celui-ci.

L'unité électronique de contrôle est configurée pour contrôler l'actionneur 5 afin d'adapter la vitesse de rotation de l'élément optique 9 selon la vitesse de déplacement du véhicule automobile. En effet, les salissures sont éliminées de l'élément optique 9 grâce à l'action de la force centrifuge liée à la rotation de cet élément optique 9, et éventuellement combinée aux frottements liés au déplacement du véhicule, en particulier lorsque le système d'assistance à la conduite 1 se trouve à l'avant du véhicule. Ainsi, plus la vitesse de déplacement du véhicule est élevée, moins la vitesse de rotation de l'élément optique 9 a besoin d'être élevée pour conserver un bon état de propreté de l'élément optique 9 et donc un fonctionnement optimisé du capteur optique 13. Ainsi, l'unité électronique de contrôle agira sur l'actionneur 5 pour qu'il diminue la vitesse de rotation de l'élément optique 9 lorsque la vitesse du véhicule augmente, notamment lorsque l'élément optique 9 est installé à l'avant du véhicule.

L'unité électronique de contrôle est configurée pour faire varier la vitesse de rotation de l'élément optique 9. Cette variation de la vitesse de rotation peut induire un changement du sens de rotation de l'élément optique 9. Avantageusement, l'unité électronique de contrôle modifie le sens de rotation de l'élément optique 9 à plusieurs reprises sur un laps de temps assez rapide. Cette modification du sens de rotation favorise l'apparition de phénomènes d'accélérations et permet d'éliminer de manière efficace les petites gouttes d'eau se trouvant sensiblement au centre de l'élément optique 9 par exemple. En effet, la variation du sens de rotation de l'élément optique 9 va soumettre les salissures à une accélération dans le sens inverse à leur déplacement ce qui va faciliter leur perte d'adhérence sur l'élément optique 9 est donc leur éjection de celui-ci.

De manière alternative ou combinée, l'unité électronique de contrôle est asservie afin de faire varier la vitesse de rotation de l'élément optique 9 afin de créer des accélérations favorisant le détachement des salissures se trouvant sur l'élément optique 9.

Lors du fonctionnement du dispositif de protection 3, l'unité électronique de contrôle est également configurée pour déclencher la projection d'au moins un fluide, comme par exemple de l'air comprimé ou du liquide de nettoyage, sur l'élément optique 9 à l'aide de la buse 22 lorsque le capteur optique 13 détecte la présence de salissures au niveau de son champ de vision par exemple.

Selon un mode de réalisation particulier, l'unité électronique de contrôle est configurée pour déclencher la projection d'air comprimé sur l'élément optique 9 lorsque le véhicule se trouve à l'arrêt ou lorsqu'il se déplace à faible allure, c'est-à-dire par exemple à une vitesse inférieure à 15 km/h. En effet, dans un tel cas, les forces aérodynamiques sont trop faibles pour être couplées de manière efficace à la force centrifuge de la rotation de l'élément optique 9 afin d'éliminer les gouttes d'eau et/ou les salissures qui peuvent se déposer sur l'élément optique 9. Par ailleurs, à faible allure ou lorsque le véhicule se trouve à l'arrêt les petites gouttes d'eau situées au centre ou à proximité du centre de l'élément optique 9 peuvent être difficiles à éliminer car la vitesse de rotation du centre de l'élément optique 9 peut être trop faible pour les éjecter. Avantageusement, la projection d'air comprimé sur l'élément optique 9 permet de compenser l'absence de forces aérodynamiques lorsque le véhicule se déplace à faible allure ou lorsqu'il est à l'arrêt.

Selon un autre mode de réalisation, l'unité électronique de contrôle peut être configurée pour déclencher la projection de liquide de nettoyage et/ou d'air comprimé au bout d'une certaine durée.

Selon encore un autre mode de réalisation, l'unité électronique de contrôle peut être configurée pour déclencher la projection de liquide de nettoyage et/ou d'air comprimé sur commande de l'utilisateur du véhicule.

L'unité électronique de contrôle est configurée, selon certains modes de réalisation, pour déclencher la projection de liquide de nettoyage et d'air comprimé de manière consécutive.

Selon un mode de réalisation particulier, lorsque le capteur optique 13 détecte la présence de salissures dans son champ de vision malgré l'effet centrifuge, l'unité de contrôle peut stopper l'actionneur 5 afin d'arrêter la rotation de l'élément optique 9. L'unité électronique de contrôle commande ensuite la projection de liquide de nettoyage par la buse 22 de manière à décoller la salissure par exemple. L'unité électronique de contrôle commande ensuite la projection d'air comprimé par cette même buse 22 ou par une seconde buse non représentée ici afin d'enlever les salissures qui se seraient incrustées sur l'élément optique 9. L'unité électronique de contrôle réactive ensuite l'actionneur 5 pour mettre de nouveau en rotation l'élément optique 9 à une vitesse de rotation donnée qui peut être supérieure ou inférieure à la vitesse de rotation de l'élément optique 9 lors du fonctionnement normal du dispositif de protection 3. La projection d'air comprimé peut être réalisée de manière antérieure, simultanée, ou encore postérieure à la reprise de la rotation de l'élément optique 9 selon ce mode de réalisation.

Avantageusement, le dispositif de protection 3 comprend un capteur de proximité, non représenté ici, relié à l'unité électronique de contrôle. Un tel capteur de proximité peut par exemple être un capteur capacitif de proximité. Le capteur capacitif de proximité est configuré pour détecter l'approche d'un autre objet à proximité de l'élément optique 9. Dans un tel cas, le capteur capacitif de proximité transmet cette information à l'unité électronique de contrôle ce qui permet à celle-ci de commander l'arrêt automatique de l'actionneur 5 afin de stopper la rotation de l'élément optique 9 en cas d'approche d'un autre objet. Ainsi, l'élément optique 9 faisant saillie de l'élément de carrosserie 2 ne peut pas être endommagé s'il se trouve en contact avec un objet du fait de sa rotation, en particulier lorsque le système d'assistance à la conduite 1 est destiné à être installé au niveau des pare-chocs avant ou arrière du véhicule.

De manière optionnelle, il est également possible de prévoir des éléments permettant de limiter le bruit du moteur afin de ne pas incommoder les passagers à l'intérieur du véhicule ou encore les autres utilisateurs lors de l'utilisation du dispositif de protection 3 du fait des hautes vitesses de rotation de l'actionneur 5.

De manière optionnelle, l'élément optique 9 du dispositif de protection 3 peut également comprendre un système de dégivrage ou de désembuage intégré pour pouvoir garantir une bonne opérabilité du système d'assistance à la conduite 1 quelles que soient les conditions météorologiques, comme un filament ou une résistance de dégivrage par exemple.

De manière optionnelle, l'élément optique 9 du dispositif de protection 3 peut être couplé à un système de mise en vibrations (transducteur piézoélectrique par exemple) de cet élément optique 9, afin d'éviter l'adhérence des salissures sur la surface externe de cet élément optique 9.

Ces exemples de réalisation sont fournis à titre illustratif et non limitatif. En effet, il est possible pour l'homme de l'art, sans sortir du cadre de l'invention, de remplacer l'actionneur 5 décrit ici par tout autre type d'actionneur permettant de mettre l'élément optique 9 en rotation. Par ailleurs, l'homme de l'art peut utiliser un élément optique 9 transparent présentant une surface extérieure ayant d'autres propriétés permettant de limiter l'adhérence des salissures sur cette surface externe sans sortir du cadre de la présente invention. De plus, il est tout à fait possible pour l'homme de l'art, sans sortir du cadre de la présente invention d'utiliser tout type de moyens de couplage 7 pour assurer la mise en rotation de l'élément optique 9, ces moyens de couplage 7 pouvant être mécaniques ou magnétiques.

Ainsi, le nettoyage rapide et efficace d'un capteur optique 13, pouvant par exemple être une caméra, destiné à équiper un véhicule automobile est possible grâce au dispositif de protection 3 de la présente invention qui comprend un élément optique 9 monté rotatif dont l'axe de rotation est confondu avec l'axe optique 15 du capteur optique 13. La rotation de l'élément optique assure l'élimination des salissures par l'action de la force centrifuge que ces dernières subissent. Le fait que l'axe de rotation de l'élément optique 9 soit confondu avec l'axe optique 15 du capteur optique 13 permet d'adapter ce système à tout type de caméra destiné à être intégré dans des éléments de carrosserie 2 d'un véhicule automobile ou installé à l'extérieur de celui-ci, tout en conservant un grand angle de vision.

## Revendications

1. Système d'assistance à la conduite (1) d'un véhicule automobile comprenant un capteur optique (13) comportant en outre un dispositif de protection (3) du capteur optique (13), le dispositif de protection (3) du capteur optique (13) comporte :
- un élément optique (9) transparent présentant une symétrie de révolution et monté rotatif autour d'un axe de rotation, l'élément optique (9) étant configuré pour être disposé en amont du capteur optique (13) de sorte que l'axe de rotation de l'élément optique (9) soit confondu avec l'axe optique (15) du capteur optique (13), et
- un actionneur (5) couplé à l'élément optique (9) pour la mise en rotation de l'élément optique (9) pour permettre l'élimination des salissures par un effet centrifuge,
**caractérisé en ce que** le système d'assistance à la conduite (1) comprend une unité électronique de contrôle configurée pour activer l'actionneur (5) afin de mettre en rotation l'élément optique (9), l'unité électronique de contrôle étant configurée pour contrôler l'actionneur (5) afin d'adapter la vitesse de rotation de l'élément optique (9) selon la vitesse de déplacement du véhicule automobile.

2. Système d'assistance à la conduite (1) selon la revendication précédente **caractérisé en ce que** l'actionneur (5) comprend un moteur électrique d'entraînement de l'élément optique (9).

3. Système d'assistance à la conduite (1) selon la revendication 2 **caractérisé en ce que** ledit moteur électrique est configuré pour mettre en rotation l'élément optique (9) à une vitesse comprise entre 1000 et 50000 tours/minute, de préférence entre 5000 et 20000 tours/minute, et de manière encore préférée entre 7000 et 15000 tours/minute.

4. Système d'assistance à la conduite (1) selon l'une quelconque des revendications précédentes **caractérisé en ce que** l'actionneur (5) est couplé à l'élément optique (9) par des moyens de couplage (7) choisi dans la liste suivante : une courroie, un engrenage, un cylindre élastique d'entraînement, un galet.

5. Système d'assistance à la conduite (1) selon l'une quelconque des revendications 1 à 4 **caractérisé en ce que** l'élément optique (9) présente une surface externe ayant au moins une des propriétés choisie dans la liste suivante : hydrophobes, photocatalytiques, super hydrophobes, oléophobes, hydrophiles, super hydrophiles.

6. Système d'assistance à la conduite (1) selon l'une quelconque des revendications précédentes **caractérisé en ce que** l'élément optique (9) est formé par une lentille extérieure de l'objectif du capteur optique (13).

7. Système d'assistance à la conduite (1) selon l'une quelconque des revendications 1 à 5 **caractérisé en ce que** l'élément optique (9) est distinct de l'objectif du capteur optique (13).

8. Système d'assistance à la conduite (1) selon la revendication 7 **caractérisé en ce que** l'élément optique (9) est relié à un cadre de fixation (30) configuré pour accueillir le capteur optique (13).

9. Système d'assistance à la conduite (1) selon l'une quelconque des revendications 1 à 8 **caractérisé en ce que** l'élément optique (9) est plan.

10. Système d'assistance à la conduite (1) selon l'une quelconques des revendications 1 à 8 **caractérisé en ce que** l'élément optique (9) est convexe.

11. Système d'assistance à la conduite (1) selon l'une quelconque des revendications précédentes **caractérisé en ce qu'**il comprend au moins une buse (22) de projection d'un fluide sur l'élément optique (9).

12. Système d'assistance à la conduite (1) selon l'une quelconque des revendications précédentes **caractérisé en ce qu'**il comprend au moins un palier (11) configuré pour assurer la mise en rotation de l'élément optique (9) par rapport au capteur optique (13).

13. Système d'assistance à la conduite (1) selon l'une quelconque des revendications précédentes **caractérisé en ce que** l'actionneur (5) est configuré pour diminuer la vitesse de rotation de l'élément optique (9) lorsque la vitesse du véhicule augmente.

14. Système d'assistance à la conduite (1) selon l'une quelconque des revendications précédentes **caractérisé en ce que** l'unité électronique de contrôle est configurée pour déclencher la projection d'au moins un fluide sur l'élément optique (9) lorsque le capteur optique (13) détecte la présence de salissures au niveau de son champ de vision.

15. Système d'assistance à la conduite (1) selon la revendication 14 **caractérisé en ce que** l'unité électronique de contrôle est configurée pour déclencher la projection de deux fluides différents, tels que du liquide de nettoyage et de l'air comprimé, de manière consécutive.

## Patentansprüche

1. Fahrassistenzsystem (1) eines Kraftfahrzeugs, welches einen optischen Sensor (13) umfasst und außerdem eine Vorrichtung zum Schutz (3) des optischen Sensors (13) aufweist, wobei die Vorrichtung zum Schutz (3) des optischen Sensors (13) aufweist:
- ein transparentes optisches Element (9), das eine Rotationssymmetrie aufweist und um eine Drehachse drehbar gelagert ist, wobei das optische Element (9) dafür ausgelegt ist, dem optischen Sensor (13) vorgeschaltet zu werden, derart, dass die Drehachse des optischen Elements (9) mit der optischen Achse (15) des optischen Sensors (13) zusammenfällt, und
- einen mit dem optischen Element (9) gekoppelten Stellantrieb (5) zum Versetzen des optischen Elements (9) in Rotation, um die Beseitigung der Verschmutzungen durch eine Zentrifugalwirkung zu ermöglichen,
**dadurch gekennzeichnet, dass** das Fahrassistenzsystem (1) ein elektronisches Steuergerät umfasst, das dafür ausgelegt ist, den Stellantrieb (5) zu aktivieren, um das optische Element (9) in Rotation zu versetzen, wobei das elektronische Steuergerät dafür ausgelegt ist, den Stellantrieb (5) so zu steuern, dass die Rotationsgeschwindigkeit des optischen Elements (9) an die Fahrgeschwindigkeit des Kraftfahrzeugs angepasst wird.

2. Fahrassistenzsystem (1) nach dem vorhergehenden Anspruch, **dadurch gekennzeichnet, dass** der Stellantrieb (5) einen Elektromotor zum Antrieb des optischen Elements (9) umfasst.

3. Fahrassistenzsystem (1) nach Anspruch 2, **dadurch gekennzeichnet, dass** der Elektromotor dafür ausgelegt ist, das optische Element (9) mit einer Geschwindigkeit zwischen 1000 und 50000 Umdrehungen/Minute, vorzugsweise zwischen 5000 und 20000 Umdrehungen/Minute und, noch stärker bevorzugt, zwischen 7000 und 15000 Umdrehungen/Minute in Rotation zu versetzen.

4. Fahrassistenzsystem (1) nach einem der vorhergehenden Ansprüche, **dadurch gekennzeichnet, dass** der Stellantrieb (5) mit dem optischen Element (9) durch Kopplungsmittel (7) gekoppelt ist, die aus der folgenden Liste ausgewählt sind: ein Riemen, ein Radgetriebe, ein elastischer Antriebszylinder, eine Laufrolle.

5. Fahrassistenzsystem (1) nach einem der Ansprüche 1 bis 4, **dadurch gekennzeichnet, dass** das optische Element (9) eine Außenfläche mit wenigstens einer der Eigenschaften aufweist, die aus der folgenden Liste ausgewählt sind: hydrophob, photokatalytisch, superhydrophob, oleophob, hydrophil, superhydrophil.

6. Fahrassistenzsystem (1) nach einem der vorhergehenden Ansprüche, **dadurch gekennzeichnet, dass** das optische Element (9) von einer äußeren Linse des Objektivs des optischen Sensors (13) gebildet wird.

7. Fahrassistenzsystem (1) nach einem der Ansprüche 1 bis 5, **dadurch gekennzeichnet, dass** das optische Element (9) von dem Objektiv des optischen Sensors (13) verschieden ist.

8. Fahrassistenzsystem (1) nach Anspruch 7, **dadurch gekennzeichnet, dass** das optische Element (9) mit einem Befestigungsrahmen (30) verbunden ist, der dafür ausgelegt ist, den optischen Sensor (13) aufzunehmen.

9. Fahrassistenzsystem (1) nach einem der Ansprüche 1 bis 8, **dadurch gekennzeichnet, dass** das optische Element (9) eben ist.

10. Fahrassistenzsystem (1) nach einem der Ansprüche 1 bis 8, **dadurch gekennzeichnet, dass** das optische Element (9) konvex ist.

11. Fahrassistenzsystem (1) nach einem der vorhergehenden Ansprüche, **dadurch gekennzeichnet, dass** es wenigstens eine Düse (22) zum Spritzen eines Fluids auf das optische Element (9) umfasst.

12. Fahrassistenzsystem (1) nach einem der vorhergehenden Ansprüche, **dadurch gekennzeichnet, dass** es wenigstens ein Achslager (11) umfasst, das dafür ausgelegt ist, das Versetzen des optischen Elements (9) in Rotation in Bezug auf den optischen Sensor (13) sicherzustellen.

13. Fahrassistenzsystem (1) nach einem der vorhergehenden Ansprüche, **dadurch gekennzeichnet, dass** der Stellantrieb (5) dafür ausgelegt ist, die Rotationsgeschwindigkeit des optischen Elements (9) zu verringern, wenn sich die Geschwindigkeit des Fahrzeugs erhöht.

14. Fahrassistenzsystem (1) nach einem der vorhergehenden Ansprüche, **dadurch gekennzeichnet, dass** das elektronische Steuergerät dafür ausgelegt ist, das Spritzen wenigstens eines Fluids auf das optische Element (9) auszulösen, wenn der optische Sensor (13) das Vorhandensein von Verschmutzungen in seinem Sichtfeld erkennt.

15. Fahrassistenzsystem (1) nach Anspruch 14, **dadurch gekennzeichnet, dass** das elektronische Steuergerät dafür ausgelegt ist, das Spritzen von zwei verschiedenen Fluiden, wie etwa von Reinigungsflüssigkeit und Druckluft, nacheinander auszulösen.

## Claims

1. A driving aid system (1) for motor vehicles comprising an optical sensor (13) additionally comprising a device (3) for protecting the optical sensor (13), the protective device (3) of the optical sensor (13) comprises:
- a transparent optical element (9) having a symmetry of revolution and mounted rotatably around an axis of rotation, the optical element (9) being configured to be arranged upstream of the optical sensor (13) so that the axis of rotation of the optical element (9) coincides with the optical axis (15) of the optical sensor (13), and
- an actuator (5) coupled to the optical element (9) for making the optical element (9) rotate, to enable soiling to be removed by a centrifugal effect,
**characterized in that** the driving aid system (1) comprises an electronic control unit configured to activate the actuator (5) in order to make the optical element (9) rotate, the electronic control unit being configured to control the actuator (5) so as to adapt the rotation speed of the optical element (9) according to the speed of movement of the motor vehicle.

2. Driving aid system (1) as claimed in the preceding claim, **characterized in that** the actuator (5) comprises an electric motor for driving the optical element (9).

3. Driving aid system (1) as claimed in claim 2, **characterized in that** said electric motor is configured to make the optical element (9) rotate at a speed of between 1000 and 50000 r.p.m., preferably between 5000 and 20000 r.p.m., and even more preferably between 7000 and 15000 r.p.m.

4. Driving aid system (1) as claimed in any of the preceding claims, **characterized in that** the actuator (5) is coupled to the optical element (9) by coupling means (7) chosen from the following list: a belt, gearing, a resilient drive cylinder, and a roller.

5. Driving aid system (1) as claimed in any of claims 1 to 4, **characterized in that** the optical element (9) has an outer surface having at least one of the properties chosen from the following list: hydrophobic, photocatalytic, superhydrophobic, oleophobic, hydrophilic, and superhydrophilic.

6. Driving aid system (1) as claimed in any of the preceding claims, **characterized in that** the optical element (9) is formed by an outer lens of the objective lens of the optical sensor (13).

7. Driving aid system (1) as claimed in any of claims 1 to 5, **characterized in that** the optical element (9) is separate from the objective lens of the optical sensor (13).

8. Driving aid system (1) as claimed in claim 7, **characterized in that** the optical element (9) is connected to a fixing frame (30) configured to receive the optical sensor (13).

9. Driving aid system (1) as claimed in any of claims 1 to 8, **characterized in that** the optical element (9) is flat.

10. Driving aid system (1) as claimed in any of claims 1 to 8, **characterized in that** the optical element (9) is convex.

11. Driving aid system (1) as claimed in any of the preceding claims, **characterized in that** it comprises at least one nozzle (22) for projecting a fluid onto the optical element (9).

12. Driving aid system (1) as claimed in any of the preceding claims, **characterized in that** it comprises at least one bearing (11) configured to enable the optical element (9) rotate relative to the optical sensor (13).

13. Driving aid system (1) as claimed in any of the preceding claims, **characterized in that** the actuator (5) is configured to reduce the rotation speed of the optical element (9) when the speed of the vehicle increases.

14. Driving aid system (1) as claimed in any of the preceding claims, **characterized in that** the electronic control unit is configured to actuate the projection of at least one fluid onto the optical element (9) when the optical sensor (13) detects the presence of soiling in its field of view.

15. Driving aid system (1) as claimed in claim 14, **characterized in that** the electronic control unit is configured to actuate the projection of two different fluids, such as cleaning liquid and compressed air, consecutively.
